# EUROPEAN PATENT APPLICATION

(11) **EP 1 107 520 A1**
(43) Date of publication of application: **13.06.2001**
(21) Application number: 99850189.4
(22) Date of filing: 06.12.1999
(51) Int. Cl.: H04L 12/56, H04L 1/00

(54) **Method and arrangement in a communication network**

(71) Applicant: TELEFONAKTIEBOLAGET LM ERICSSON, 126 25 Stockholm (SE)
(72) Inventor: Rune, Johan, 181 30 Lidingö (SE)
(74) Representative: Hytting, Kerstin Cecilia

(57) **Abstract**

The present invention relates to an arrangement and a method for routing packets to be transferred within a Bluetooth network. More particularly it relates to the problem of high level routing within Bluetooth networks, requiring a lot of processing overhead and unnecessary data over head.

The Bluetooth network includes multiple slaves and one master. The master controls all the communication within the network and stores addresses of the slaves. A packet constituting a Baseband Packet is to be transferred from a first slave, via the master to a second slave. The first slave obtains the address of the second slave from the master, notes it in the header of the Baseband packet and transmits it to the master. The master analyses the address in the header and forwards the packet to the second slave according to the address.

## Description

### FIELD OF INVENTION

The present invention relates to a method, arrangement and node in a digital communication system constituting a network of multiple nodes. More specifically the present invention relates to a method, arrangement and node for routing packets within a Bluetooth network.

### DESCRIPTION OF RELATED ART

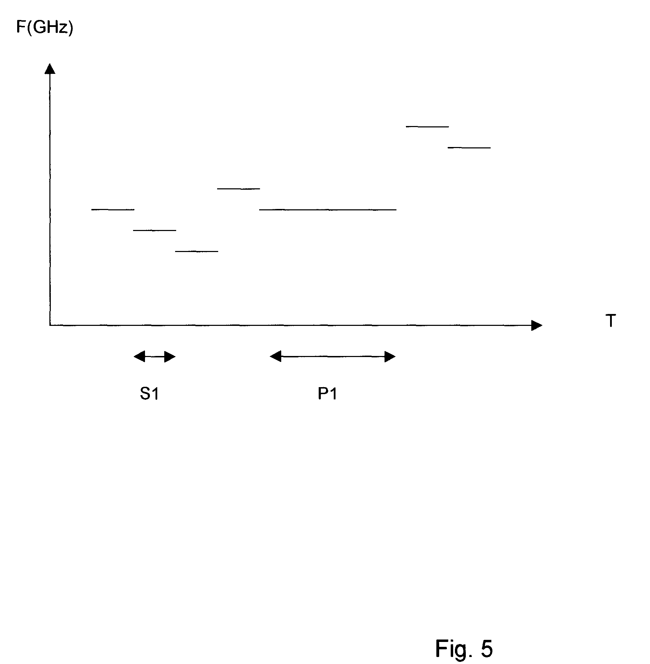

The so-called Bluetooth interface is an example of a modern small short-range radio interface, which was originally intended as a replacement for cables between units. The term Bluetooth is in this disclosure used as an example of usage of short-range radio communication. However, the area of applicability has proven to be much wider. Printers, digital cameras, telephones, laptop computers, video monitors, electronic calendars (PDA), desktops, fax machines, keyboards, joysticks and virtually any other digital device can be part of the short-range radio system, i.e. any of these devices could have certain Bluetooth radio chip and its software. But beyond untethering devices by replacing the cables, the short range radio technology provides a universal bridge to existing data networks, a peripheral interface, and a mechanism to form small private ad hoc groupings of connected devices away from fixed network infrastructures or connected to a fixed network infrastructure via a gateway. Designed to operate in a noisy radio frequency environment, the Bluetooth radio uses a fast acknowledgement and frequency hopping scheme to make the link robust. Bluetooth radio modules avoid interference from other signals by hopping to a new frequency after transmitting or receiving a data packet, as is shown in **figure 5**. Compared with other systems operating in the same frequency band, the Bluetooth radio typically hops faster and uses shorter data packets. This makes the Bluetooth radio more robust than other systems. Use of Forward Error Correction (FEC) limits the impact of random noise on long-distance links.

Bluetooth radio is a wireless communication technology using a frequency-hopping scheme in the unlicensed ISM (Industrial Scientific Medical) band at 2,4 GHz. A frequency hop transceiver is applied to combat interference and fading. A shaped, binary FM modulation is applied to minimize transceiver complexity. The gross data rate is 1Mb/s and a TDD (Time-Division Duplex) scheme is used for full-duplex transmission.

The Bluetooth Baseband protocol is a combination of circuit and packet switching. In **figure 5**, s1 denotes one time slot, and pi denotes a packet covering three time slots. Time slots can be reserved for synchronous packets. Each packet is normally transmitted in a different hop frequency. A packet nominally covers a single slot, but can be extended to cover up to five slots. Bluetooth can support an asynchronous data channel, up to three simultaneous synchronous voice channels, or a channel with simultaneously supports asynchronous data and synchronous voice. Each voice channel supports 64 kb/s synchronous (voice) link. The asynchronous channel can support an asymmetric link of maximally 721 kb/s in either direction while permitting 57,6 kb/s in the return direction, or a 432,6 kb/s symmetric link.

In **figure 6**, the different function blocks of a system using short-range radio transceivers, such as Bluetooth are shown. A radio unit 601 is connected to a link control unit 602 providing the base band. The link control unit 602 is connected to the Central Processing Unit, called CPU, 603 providing the link management. The CPU is connected to the memory 604 providing software functions and consisting of two memory units: a SRAM 605 and a FLASH 606. The CPU 603 is connected to a host interface 607. A SRAM is a fast temporary memory. FLASH is programmable ROM.

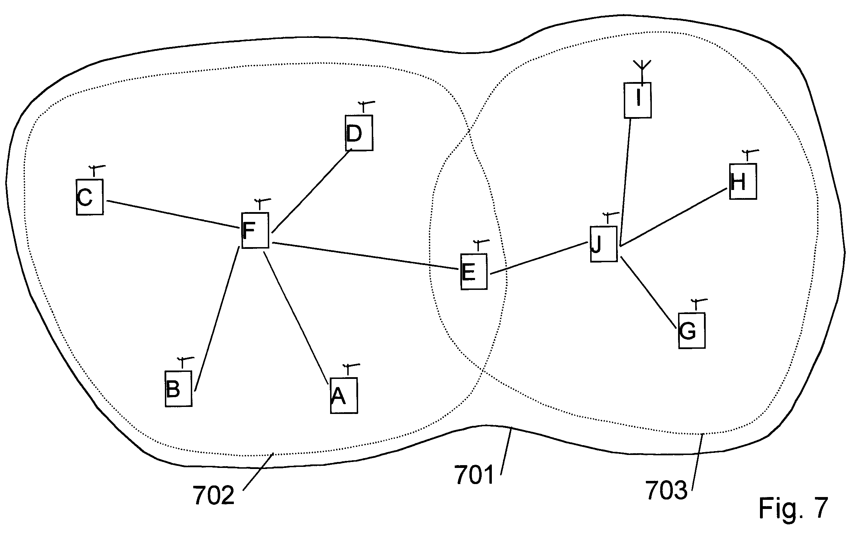

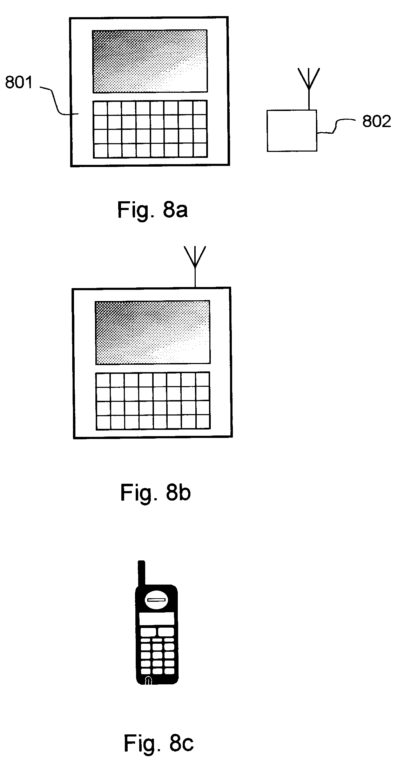

**Figure 7** shows two piconets 702 and 703 constituting a so-called scatternet 701. The piconet 702 includes six radio devices A, B, C and D; and piconet 703 includes five devices E, G, H, I and J. In piconet 702, device F is a master device. Two or more Bluetooth (BT) units sharing the same channel form a piconet, i.e. a piconet is a collection of devices connected via Bluetooth technology in an ad hoc fashion. Within a piconet a BT unit can have either of two roles: master or slave. Within each piconet there may be one and only one master, and up to seven active slaves, i.e. a piconet starts with two connected devices, such as portable PC and a cellular telephone, and may grow to eight connected devices. All Bluetooth devices are peer units and have identical implementations. Any BT unit can become master in a piconet. However, when establishing a piconet, one unit will act as a master and the other(s) as slave(s) for the duration of the piconet connection. A scatternet, or an ad hoc network, is a network including multiple independent and non-synchronized piconets. In this disclosure, a master unit is the device in a piconet whose clock and hopping sequence are used to synchronize all other devices in the piconet. In this disclosure, a slave unit is every device in a piconet that is not the master. Furthermore, two or more piconets can be interconnected, forming a scatternet as depicted in **figure 7**. The connection point between two piconets consists of a BT unit E that is a member of both piconets. A BT unit can simultaneously be a slave member of multiple piconets, but only master in one piconet. I.e. a BT unit functioning as master in one piconet can act as a slave in another piconet. A BT unit can only transmit and receive data in one piconet at a time, so participation in multiple piconets has to be on a time division multiplex basis. The Bluetooth system supports both point-to-point and point-to-multi-point connections. Several piconets can be established and linked together ad hoc, where each piconet is identified by a different frequency hopping sequence. All users participating on the same piconet are synchronized to this hopping sequence. The scatternet topology can best be described as a multiple piconet structure, see fig. 8. However, scatternet enabled BT units are not yet commercially available.

**Figure 8a** shows a PDA 801 utilising an "add-on" bluetooth communication device 802. The bluetooth communication device, provided with an antenna, is inserted in a slot in the PDA. The bluetooth communication device may be a PC-card or a compact flashcard provided with the bluetooth chipset.

**Figure 8b** shows a PDA utilising a "built-in" bluetooth communication device. Here, the PDA is provided with an antenna.

**Figure 8c** shows a mobile telephone utilising a "built-in" bluetooth communication device, the mobile telephone and the bluetooth transceiver having different antennas.

The Bluetooth system provides full-duplex transmission built on slotted Time Division Duplex (TDD), where each slot is 0,625 ms long. The time slots are numbered sequentially using a very large number range (cyclic with a cycle of 2²⁷). Master-to-slave transmission always starts in an even-numbered time slot while slave-to-master transmission always starts in an odd-numbered time slot. The term "frame" as used in this disclosure is defined as the combination of an even numbered time slot and its subsequent odd numbered time slot (i.e. a master slave time slot and a slave-to-master time slot, except when multi-slot packets are used). In a communication system using Bluetooth technology there is no direct transmission between slaves in Bluetooth piconet.

The communication within a piconet is organised such that the master polls each slave according to some polling scheme. With one exception a slave is only allowed to transmit after having been polled by the master. The slave will then starts its transmission in the slave-to-master time slot immediately following the packet received from the master. The master may or may not include data in the packets used to poll the slave. The only exception to the above principle is that when a slave has an established SCO link, the slave is always allowed to transmit in the pre-allocated slave-to-master slot, even if not explicitly polled by the master in the preceding master-to slave slot. The term SCO-link will be disclosed in more details below.

Each BT unit has a globally unique 48-bit IEEE 802 address. Said address, in this disclosure called the Bluetooth Device Address (BD_ADDR) is assigned when the BT unit is manufactured and it is never changed. In addition to this, the master of a piconet assigns a local Active Member Address (AM_ADDR) to each active slave of the piconet. The AM_ADDR, which is only three bits long, is dynamically assigned and de-assigned and is unique only within a single piconet. The master uses the AM_ADDR when polling a slave in a piconet. However, when the slave, triggered by a packet from the master addressed with the AM_ADDR of the slave, transmits a packet to the master, it includes its own AM_ADDR (i.e. not the AM_ADDR of the master which not exist) in the header of the packet.

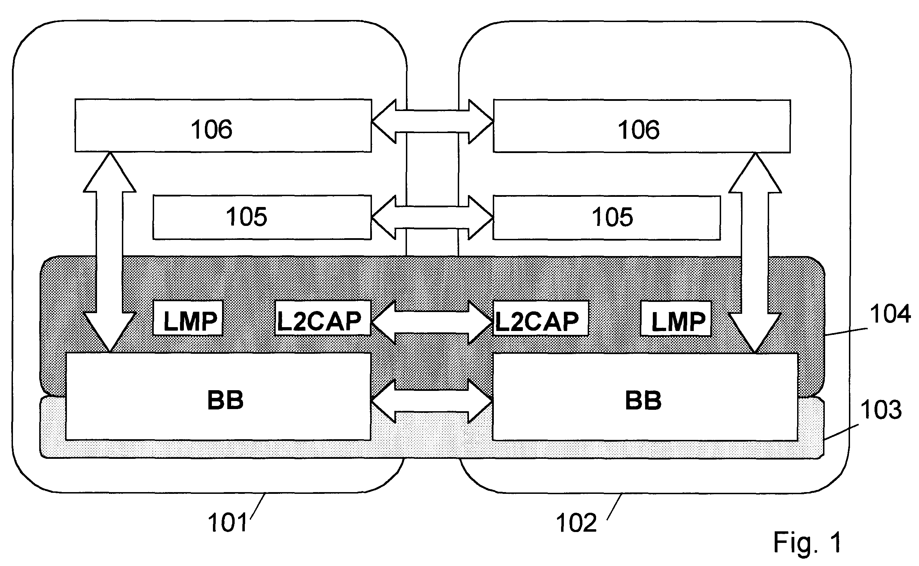

The Bluetooth protocol stack will be described, according to the specifications of the Bluetooth system. The protocol stack, which is depicted in **figure 1**, includes two Bluetooth (BT) units 101 and 102. In the figure the physical layer, 103 and the data link layer, 104 are shown.

### Baseband BB

The Baseband describes the specifications of the digital signal processing part of the hardware i.e. the Bluetooth link controller, which carries the Baseband protocols and other low-level link routines. The Baseband resides in the physical layer 103 and the data link layer 104. The Baseband Specification defines two link types: Synchronous Connection-Oriented (SCO) links and Asynchronous Connection-Less (ACL) links. SCO links support real-time voice traffic using reserved bandwidth. ACL links support best effort traffic.

### Link Manager Protocol LMP

LMP handles messages used for link set-up, security and control. LMP is layered over the Baseband Protocol and resides in the data link layer 104.

### Logical Link Control and Adaptation Layer Protocol, L2CAP

L2CAP is also layered over the Baseband Protocol and resides in the data link layer 104. L2CAP provides connection-oriented and connectionless data services to upper layer protocols with protocol multiplexing capability, segmentation and reassemble operation, and group abstractions. The L2CAP Specification is only defined for ACL links.

### Network Layer 105.

The network layer is currently not specified in the Bluetooth standard. High Level Protocol or application layer 106.

### High Level Protocol or application layer may or may not be bluetooth specific.

The BB, LMP and L2CAP represent existing Bluetooth specific protocols. The "Higher level protocol or application" layer 106 represents protocols that may or may not be Bluetooth specific, while the Network layer 105 is currently not specified in the Bluetooth standard. An additional Bluetooth layer is proposed, a so-called Network Adaption Layer (NAL) which resides between the data link layer 104, and the network layer 105.

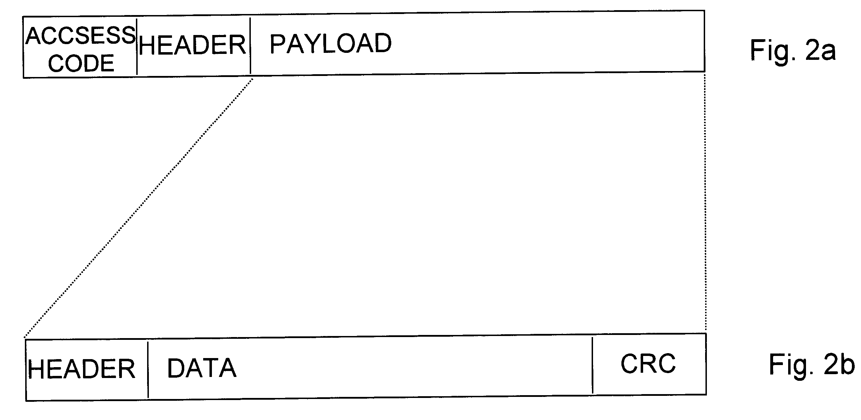

**Figure 2a** shows the standard Bluetooth packet. It includes an Access Code, a header and payload. The format of the payload depends on the type of packet being transmitted. The payload of an ACL packet, which is shown in **figure 2b**, consists of a header, a data field and a Cyclic Redundancy Check, (CRC) field. The payload of an SCO packet consists only of data field. In addition there are hybrid packets including two data fields, one for synchronous data and one for asynchronous data. Packets in which the payload does not include a CRC are neither acknowledged nor retransmitted.

As previously stated, a transmission in a piconet is allowed only between the master and a slave and vice versa. Furthermore, the addressing scheme states that when transmitting to the master, the AM_ADDR of the transmitting slave is used. A consequence of this is that there is no way for a slave to send data to another slave in a piconet since there is no way to address another slave. Neither is direct communication allowed. Hence, a slave can only communicate with the master of the piconet, while the master can communicate with all the slaves. This limitation is an obstacle to efficient networking in the Bluetooth system.

There are currently two main alternatives proposed.

One is to use IP for addressing and routing in a scatternet as well as within a piconet. This means that IP takes the place of the network layer in the Bluetooth protocol stack. On the Baseband layer, the AM_ADDR would still be used.

The other alternative is to use the NAL between the data link layer and the network layer. This would emulate a shared medium network towards the network layer. Addressing and routing, in a scatternet as well as within a piconet, would be done using the BD_ADDR. On the Baseband layer, the AM_ADDR would still be used.

A problem with the two proposed approaches is that they relay on high level routing in the master of a piconet, even for the simple inter-piconet routing. In the IP approach, the routing is performed on the IP layer, i.e. on the network layer. In the NAL approach, the routing is performed on the NAL layer. Traversing all the lower layer protocols, for each packet to be forwarded between two slaves in a piconet, creates a lot of processing overhead in the master unit. In addition, including the destination IP address, which is 32 bits in IPv4 and 128 bits in IPv6, or the destination BD_ADDR which is 48 bits, in a packet creates unnecessary data overhead, which reduces the throughput of the piconet.

An additional problem with the IP approach is that many functions in an IP network relies on a broadcast medium i.e. shared medium, on the data link layer. Examples of such functions are the Dynamic Host Configuration Protocol (DHCP) and the Address Resolution Protocol (ARP). This problem, associated with the IP approach, was the reason for suggesting the NAL approach.

### SUMMARY OF THE INVENTION

The present invention relates to the requirement of low layer slave-to-slave routing in a Bluetooth network. More particularly, it relates to the problem of high level routing within Bluetooth networks, requiring a lot of processing overhead and unnecessary data overhead.

Accordingly, it is an object of the present invention to unravel the above-mentioned problem.

The aforesaid problem is solved by means of a method for low-level routing of a packet within a Bluetooth network, using the Baseband packet header for addressing the destination.

The following scenario of routing a packet in a Bluetooth network describes the inventive concept of the present invention.

A packet constituting a Baseband Packet is to be transferred from a first slave, via the master to a second slave. The first slave obtains the address of the second slave from the master, notes it in the header of the Baseband packet and transmits it to the master. The master analyses the address in the header and forwards the packet to the second slave according to the address.

An advantage of the present invention is that forwarding packets between slave units within a Bluetooth network is enabled on the Baseband layer.

Another advantage of the present invention is that the overhead in the transferred data is reduced which implies that the throughput of the piconet is increased.

Another advantage of the present invention is that the processing in the master is reduced which implies that the power consumption is reduced, which is important for portable units.

Yet another advantage of the present invention is that it can be used in conjunction with existing proposals for Bluetooth networking on higher layers.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Figures 1-2b and 5-8c are related to Prior Art and described above, under "Description of related art".
- Figure 1: shows a diagram of a Bluetooth protocol stack.
- Figure 2a: shows a diagram of a Baseband packet format.
- Figure 2b: shows a diagram of the payload format of an ACL Baseband packet.

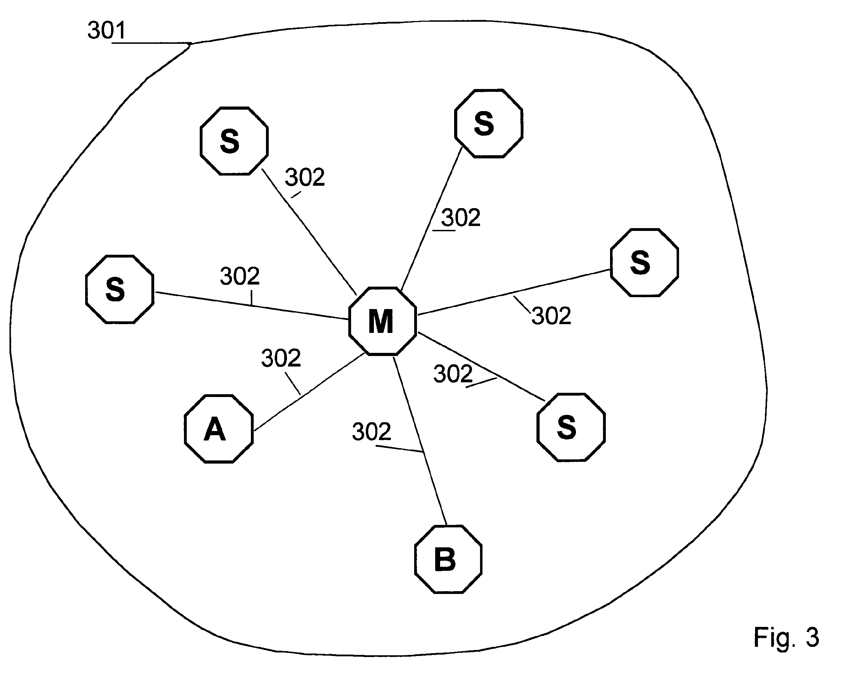

- Figure 3: shows a scenario of a Bluetooth network

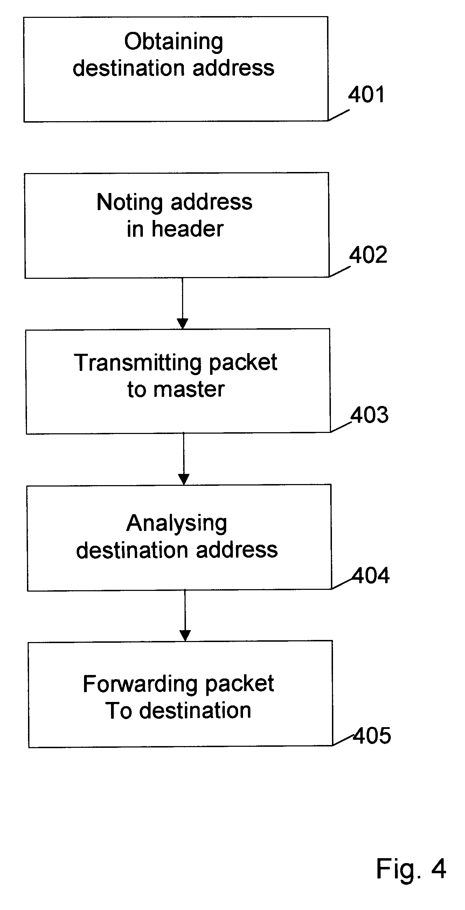

- Figure 4: shows a flowchart of the general method of the invention.
- Figure 5: is a diagram showing the relationship between time slots and frequency hops in a system using Bluetooth.

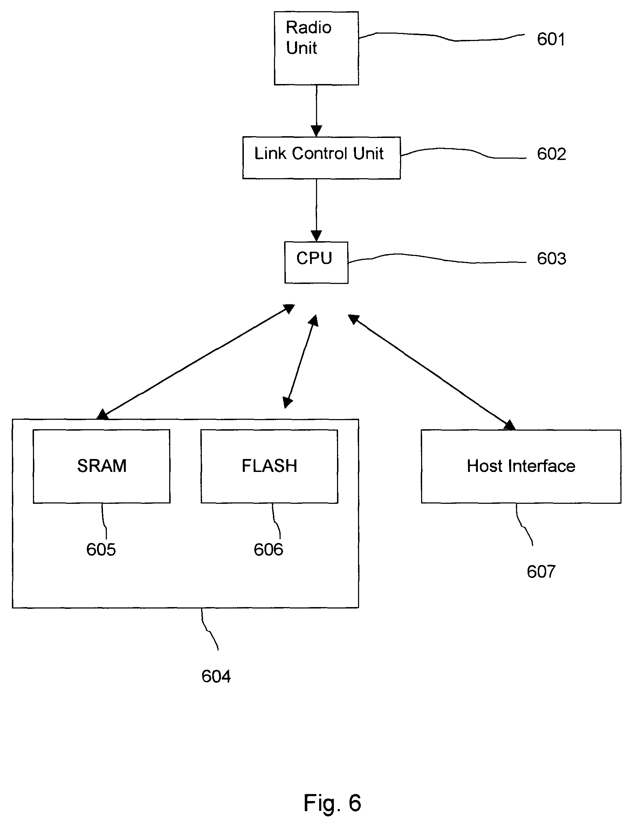

- Figure 6: is a schematic view illustrating a communication system of bluetooth cells.
- Figure 7: is a schematic view illustrating the Bluetooth protocol layers.
- Figure 8a-8c: shows a schematic view of three electronic devices provided with a Bluetooth-transceiver.

### DETAILED DESCRIPTION

Figures 1-2b and 5-8c are figures related to Prior Art and are described under "Description of related art".

**Figure 3** shows a possible scenario of the present invention. A Bluetooth BT network 301 includes multiple nodes, so-called BT units A, B, M and S, whereof one constitutes a master M and up to seven nodes constitutes slaves A, B and S. The slaves A, B and S are communicating with the master M over radio links 302. The slaves A, B and S each have a respective address, e.g. an Active Member Address AM_ADDR. The addresses are stored in a database available for the master. Within the network Baseband packets, including a header, are transferred. The master M controls all the communication within the network. The nodes include a digital computer having an internal memory for storing a computer program. According to the invention a Baseband packet is to be routed from a first slave, A via the master M, to a second slave B.

To perform the transmission of the packet to the second slave B, the first slave A requires relevant information about second slave B, e.g. the address of the second slave B. This address is obtained from the master M. One way is to let the master M distribute the relevant information of all of the respective slaves among the slave units. The first slave A, notes the address information of the second slave B, in the header of the Baseband packet, which can be seen in figure 2a.

In order for the scheme to be feasible the principles for how the AM_ADDR is used on the Baseband layer have to be changed. Currently, the master includes the AM_ADDR of the addressed slave in the Baseband header. This should remain. But in the slave-to-maser direction, the slave should include the AM_ADDR of the addressed slave, i.e. the slave to which the master should forward the packet, in the Baseband packet header instead of its own AM_ADDR. If the slave wants to address the master it should include its own AM ADDR, since the master does not have an AM_ADDR.

Back to figure 3. The Baseband packet is transmitted to the master M. The master M, has to analyse the address in the header of the Baseband packet to get to know whether the packet is meant for the master M, and then should be sent upwards in the protocol stack, or shall be forwarded to any of the slaves B or S, and in that case which of them. In this case the address analysis results in forwarding the packet to the second slave B. Before forwarding the packet it is cached in a memory of the master M.

The current Bluetooth specifications states that the recipient master or slave should check the payload CRC, if it is present in a packet. The 1-bit acknowledgment indication ARQN in the Baseband packet header is used to inform the source of a successful or unsuccessful transfer of payload data with CRC and can be positive acknowledge ACK or negative acknowledge NAK. If the reception was successful, an ACK (ARQN=1) is returned, otherwise a NAK (ARQN=0) is returned. When no return message regarding acknowledge is received, a NAK is assumed implicitly. NAK is also the default return information.

When a Baseband packet including a payload CRC is to be forwarded to another slave as indicated by the address in the Baseband packet header, there are two alternative ways for how to deal with the CRC.

In one embodiment of the present invention the payload CRC is not checked in the master. The packet is immediately forwarded to the addressed slave, i.e. the second slave B. If the second slave detects an error when checking the payload CRC, it requests a retransmission. Before retransmitting the packet, the master M must find out whether the error occurred during the transmission from the first slave A to the master M, or during the transmission from the master M to the second slave B. The master can get to know this by checking the payload CRC in the cached packet. If no error is found, the packet is retransmitted to the second slave B. If an error is detected, retransmission is requested from the sending slave. In the later use, the procedure is now repeated, i.e. when the retransmitted packet is received by the master M, it forwards it to the second slave B without checking the payload CRC. This scheme requires that the sending slave should not be polled again before the previously transmitted packet has been forwarded to the second slave B and an ACK/NAK has been received by the master M from the second slave B.
An alternative is that the master M, when receiving a retransmitted packet from the first slave A, checks the payload CRC before forwarding the packet to the second slave B, since the error in the first transmission may indicate a reduced quality of the radio channel from the sending slave.

In another embodiment of the present invention, the master M checks the payload CRC and acts according to the Bluetooth specifications. The packet is not forwarded to the second slave until an error free packet has been received by the master M. However, receiving an ACK from the master M would then not be proof to the first slave A, that the packet has actually reached the second slave B. If the master M, after forwarding the packet to the second slave B, receives a NAK in return, or no return message at all, the first slave A, is not automatically informed. After a number of unsuccessful retransmission attempts, the packet is dropped by the master M. One way to handle this is to let the Baseband layer of the master M, upon forwarding delivery failure, pass a notification of the delivery failure upward through the protocol stack to the proposed Network Adaption Layer NAL, if it is present, or to the Network layer. The NAL or the Network layer then sends a message to its peer entity in the first slave A, indicating the delivery failure and possibly, information about the last packet that was successfully delivered or the first packet that failed. An alternative way is to design a new LMP Protocol Data Unit UDP to convey the information from the master to the sending slave.

In some cases it may be necessary to include the source address, i.e. the address of the first slave A. When a source address is required the address, e.g. the AM_ADDR of the first slave A is included in the Baseband packet header. Another alternative is to include the AM_ADDR or BD_ADDR of the first slave A in the NAL header, when the invention is used in conjunction with the NAL approach, or to rely on the IP address of the first slave A included in the IP header when the invention is used in conjunction with the IP approach.

**Figure 4** shows a flowchart of a possible scenario of routing a packet from a first slave A via a master M to a second slave B within the Baseband layer of a Bluetooth network. The Bluetooth network includes multiple nodes A, B, M and S.

### The method includes the following steps:

- 401: The first slave A obtains the address of the second slave B from the master M.
- 402: The first slave A notes the obtained address of the second slave B in the header of the Baseband packet.
- 403: The first slave A then transmits the packet to the master M.
- 404: The master M reads in the header of the Baseband packet, the address of the destination node, i.e. in this case the second slave B's address.
- 405: The master forwards the packet to the destination node, i.e. the second slave B, according to the address.

The method is implemented by means of a computer program product including the software code portions for performing the steps of the method. The computer program product is run on a computer stored in a digital computer within a node of the Bluetooth network.
The computer program is loaded directly or from a computer usable medium, such as floppy-disc, CD, Internet etc.

## Claims

1. Method for routing a packet from a first slave (A) to a second slave (B) within a Bluetooth network (301), the network including multiple nodes, whereof one node constitutes a master (M) and at least two nodes constitute slaves, a first slave (A) respective a second slave (B), the slaves each having an address, stored in a database which is available for the master (M), the packet being a Baseband packet having a header, and the master (M) controlling all the communication in the network, the method including the steps of:
*obtaining* (401) the address information of the second slave (B) from the master (M);
*noting* (402) the address information of the second slave (B) in the header of the Baseband packet;
*transmitting* (403) the Baseband packet from the first slave (A) to the master (M);
*analysing* (404) the address information of the second slave (B) in the header of the Baseband packet; and
*forwarding* (405) the Baseband packet from the master (M) to the second slave (B) according to the address information.

2. Method according to the previous claim, wherein the address information constitutes an AM_ADDR.

3. Method according to any of the previous claims wherein the Baseband packet includes payload Cyclic Redundancy Check (CRC) and the payload CRC is not checked in the master (M) when the Baseband packet was forwarded, the method including the further step to be taken by the second slave (B) after the forwarding step;
*checking* the payload CRC.

4. Method according to the previous claim, including the further step to be taken if the checking results in that an error is detected:
*requesting* a retransmission of the concerned Baseband packet from the master (M) to the second slave (B).

5. Method according to the previous claim, wherein the forwarded Baseband packet is cached in a memory within the master (M), including the further step to be taken by the master (M), after receiving the request of retransmission:
*checking* the payload CRC in the cached Baseband packet.

6. Method according to the previous claim, including the further step to be taken by the master (M), if the payload CRC results in no error found:
*retransmitting* the Baseband packet to second slave (B).

7. Method according to claim 5, including the further step to be taken by the master (M), if the payload CRC results in error detected:
*requesting* retransmission of the Baseband packet from the first slave (A).

8. Method according to any of the claims 1 or 2, wherein the Baseband packet includes payload CRC the method including the further steps; to be taken by the master (M);
*checking* the payload CRC in the master (M) before the forwarding step; and
*checking* the payload CRC in the second slave (B) after the forwarding step.

9. Method according to the previous claim, including the further step to be taken after checking the payload CRC in the second slave (B) and if the checking results in that an error is detected;
*requesting* a retransmission of the concerned Baseband packet from the master (M) to the second slave (B).

10. Method according to the previous claim, including the further step to be taken by the master (M), if after a number of unsuccessful retransmissions attempts and the master (M) intends to discard the Baseband packet:
*passing* a notification of delivery failure upward through the protocol stack within the master (M), to a layer higher than the Baseband layer.

11. Method according to the previous claim, including the further step of:
*sending* a message from the higher layer of the master (M) to the peer entity in the first slave (A), the message including an indication of the delivery failure.

12. Method according to the previous claim, wherein the message further includes information of the last packet successfully delivered.

13. Method according to claim 11, wherein the message further includes information of the first packet unsuccessfully delivered.

14. Method according to any of the claims 1 or 2, including the step of:
*including* the address information of the first slave in the Baseband packet header.

15. Method according to any of the claims 1 or 2, including the step of:
*including* the address information of the first slave in a NAL packet header.

16. A computer program product directly loadable into the internal memory of a digital computer within a node being a member of a Bluetooth communication network, including the software code portions for performing the steps of any of the claims 1-15, when said product is run on a computer.

17. A computer program product stored on a computer usable medium, including readable program for causing a computer, within a node being a member of a Bluetooth communication network, to control an execution of the steps of any of the claims 1-15.

18. A Bluetooth network (301) including multiple nodes (A, B, M and S), whereof one node constitutes a master (M) and at least two nodes constitute slaves, a first slave (A) and a second slave (B), the slaves each having an address, the packet being a Baseband packet having a header, and the master (M) controlling all the communication in the network, characterised in that
the respective address of the slaves (A, B and S) within the network are stored in a database available for the master (M),
the first slave (A) having means for obtaining the address information of the second slave (B) from the master (M),
the first slave (A) having means for noting the address information of the second slave (B) in the header of the Baseband packet,
the first slave (A) having means for transmitting the Baseband packet to the master (M),
the master (M) having means for analysing the address information of the second slave (B) in the header of the Baseband packet, and
the master (M) having means for forwarding the Baseband packet to the second slave (B) according to the address.

19. Bluetooth network (301) according to the previous claim, **characterised** in that the address constitutes of an AM_ADDR.

20. Bluetooth network (301) according to claim 18, **characterised** by, the master (M) having means for passing a notification of delivery failure upward through the protocol stack within the master (M), to a layer higher than the Baseband layer.

21. Bluetooth network (301) according to the previous claim, **characterised** by, the layer higher than the Baseband layer of the master (M) having means for sending a message to the peer entity in the first slave (A), the message including an indication of the delivery failure.

22. Bluetooth network (301) according to claim 18, **characterised** by the master (M) having a memory for caching the Baseband packet to be forwarded.

23. Bluetooth network (301) according to claim 18, **characterised** by the first slave (A) having means for including its address in the Baseband packet header.

24. Bluetooth network (301) according to claim 18, **characterised** by the first slave (A) having means for including its address in the NAL packet header.
